# EUROPEAN PATENT APPLICATION

(11) **EP 1 816 888 A1**
(43) Date of publication of application: **08.08.2007**
(21) Application number: 07001264.6
(22) Date of filing: 22.01.2007
(51) Int. Cl.: H04Q 7/38

(54) **Method and apparatus for providing service in a multi-ran comminucation system**

(30) Priority: 03.02.2006 US 764933 P; 10.01.2007 US 621612
(71) Applicant: Motorola, Inc., Schaumburg, IL 60196 (US)
(72) Inventor: Sayeedi, Shahab, M., Naperwille, Illinois 60540 (US); Martinovich, Kris, K., Streamwood, Illinois 60107 (US)
(74) Representative: Openshaw, Paul Malcolm

(57) **Abstract**

To address the need for more resource efficient methods of providing service in multi-RAN communication systems (600), various embodiments are described for informing a cross-paging RAN that a targeted remote unit (601) is not accepting a service request, for informing a serving RAN that the targeted remote unit is accepting the service request, and for informing an IMS (IP Multimedia Subsystem) network (611) that the targeted remote unit is moving from the serving RAN to the cross-paging RAN (or simply moving to another RAN without being cross-paged). Thus, embodiments such as those described herein can enable multi-RAN communication systems to more quickly release unneeded resources, to reduce the amount of unnecessary paging, and to minimize cross-paging when an IMS core network is available to deliver voice over IP (VoIP) calls.

## Description

### Reference(s) to Related Application(s)

The present application claims priority from provisional application, Serial No. 60/764933, entitled "METHOD AND APPARATUS FOR PROVIDING SERVICE IN A MULTI-RAN COMMUNICATION SYSTEM," filed February 3, 2006, which is commonly owned and incorporated herein by reference in its entirety.

This application is related to a co-pending application, Serial No. 11/141926, entitled "METHOD AND APPARATUS TO FACILITATE INTER-OPERABILITY BETWEEN A 3G1X NETWORK AND A WIRELESS PACKET DATA NETWORK," filed June 1, 2005, which is commonly owned and incorporated herein by reference in its entirety.

### Field of the Invention

The present invention relates generally to wireless communication systems and, in particular, to providing service in a multi-RAN (radio access network) communication system.

### Background of the Invention

Operators are beginning to roll out new 1x-HRPD (High Rate Packet Data or 1XEV-DO) inter-technology networks where the 1x RAN (radio access network) provides circuit services and the HRPD RAN provides packet data services to remote units such as 'hybrid' mobiles, or mobiles capable of supporting both the 1x and HRPD air interface (i.e., mobile stations / access terminals (MSs/ATs)). Circuit services typically include traditional circuit voice service, Short Message Service (SMS), etc., while packet data services include support for internet applications such as VoIP (Voice over IP), Video Telephony, Instant Messaging, email, etc.

While the 1x RAN may also provide packet data service support, many operators plan to reserve 1x RAN network resources exclusively for circuit services. In these types of 1x-HRPD inter-technology networks, an MS/AT currently active with a packet data call may be 'cross-paged' by the 1x RAN via the HRPD RAN for a 1x circuit voice call. The MS/AT may decide to either accept the call, or it may reject the call.

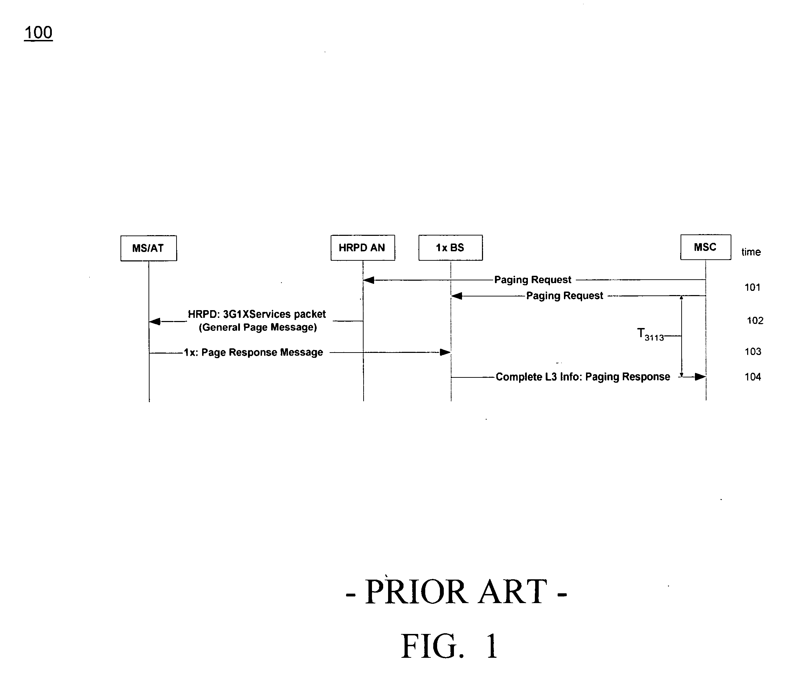

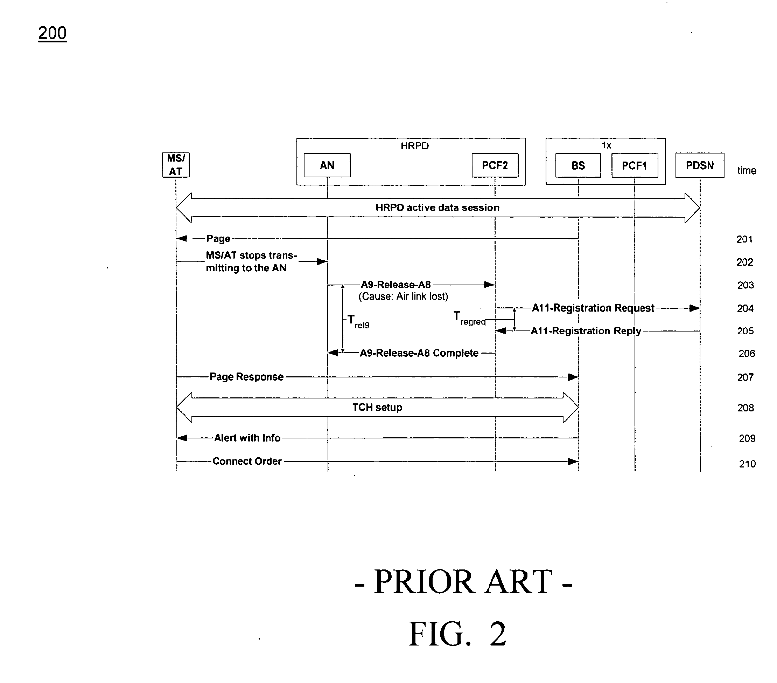

FIG. 1 is an exemplary call flow diagram 100 depicting a 1x page delivery to an MS/AT in an HRPD system, in accordance with the prior art. See 4.5.3 of 3GPP2/A.S0008-A v0.3 (V&V Version). In the current art, if the MS/AT accepts the call, it responds by acknowledging the 1x Page Request received via the HRPD RAN with a Page Response message to the 1x RAN. Call flow diagram 100 depicts an MS/AT 1x call termination, paging and subsequent service option notification over the HRPD air interface. The MS/AT is registered in and monitoring the HRPD system when the call arrives at the MSC, destined for the MS/AT. The following is a detailed description of the call flow timeline as labeled on the rightmost column of FIG. 1:
101. The MSC (mobile switching center) determines that an incoming call terminates to an MS/AT within its serving region. The MSC sends a Paging Request message to the HRPD AN and one or more 1x BSs (base stations) reachable by an MS/AT within the HRPD AN's paging area. The MSC starts an instance of timer T3113 for each Paging Request message sent. Note that the Paging Request message may contain a Virtual Page Indicator (VPI) identifying that the 1x BS shall prepare to receive a Page Response Message from the MS/AT.
102. The HRPD AN sends a General Page Message to the MS/AT.
103. The MS/AT tunes to the 1x system and acknowledges the page by transmitting a Page Response message over the 1x Access Channel.
104. The 1x BS constructs the Paging Response message, places it in the Complete Layer 3 Information message, and sends the message to the MSC. If the Paging Request message contained a Tag IE, the 1x BS includes this element in the Paging Response message. The MS/AT is implicitly registered in the 1x system. See the 3GPP2 standards documentation for a more detailed description of the completion of the MS call termination in the 1x system. The MSC stops timer T3113.
As can be seen from the call flow above, the HRPD RAN is unaware that the MS/AT has moved to the 1x RAN to answer the call and may continue holding network resources for the MS/AT's packet data session long after it has left. FIG. 2 illustrates a potential solution to this problem.

FIG. 2 is an exemplary call flow diagram 200 depicting an AT leaving during an active HRPD Data Session, in accordance with the prior art. See 4.2.2 of 3GPP2/A.S0008-A v0.3 (V&V Version). Call flow diagram 200 depicts an MS/AT leaving the HRPD session due to a terminated voice call or other reasons, while the MS/AT has an active packet data session. The scenario assumes that the AT does not initiate concurrent services prior to the detection of the loss of the HRPD radio link. The following is a detailed description of the call flow timeline as labeled on the rightmost column of FIG. 2:
201. The BS sends a Page Message containing the MS/AT address over the paging channel. If the MS/AT accepts the Page message, the MS/AT stops transmitting to the AN. The MS/AT may ignore this Page Message to continue the HRPD session. If the MS/AT ignores the message, the following steps are not performed.
202. The AN determines that it is not receiving any transmissions from the MS/AT and considers the connection to be lost at this point.
203. The AN sends an A9-Release-A8 message with cause value indicating 'Air link lost', to PCF2 and starts timer Trel9.
204. PCF2 sends an A11-Registration Request message containing an Active Stop accounting record to the PDSN and starts timer Tregreq.
205. The PDSN sends an A11-Registration Reply message to PCF2. PCF2 stops timer Tregreq upon receipt of this message.
206. PCF2 sends an A9-Release-A8 Complete message to the AN. The AN stops timer Trel9.
207. The MS/AT sends a Page Response message to the BS. This step can occur any time after step 203.
208. The BS establishes a traffic channel upon receipt of the Assignment Request message.
209. The BS sends an Alert with Info message to instruct the MS/AT to ring.
210. The MS/AT sends a Connect Order message when the call is answered at the MS/AT.

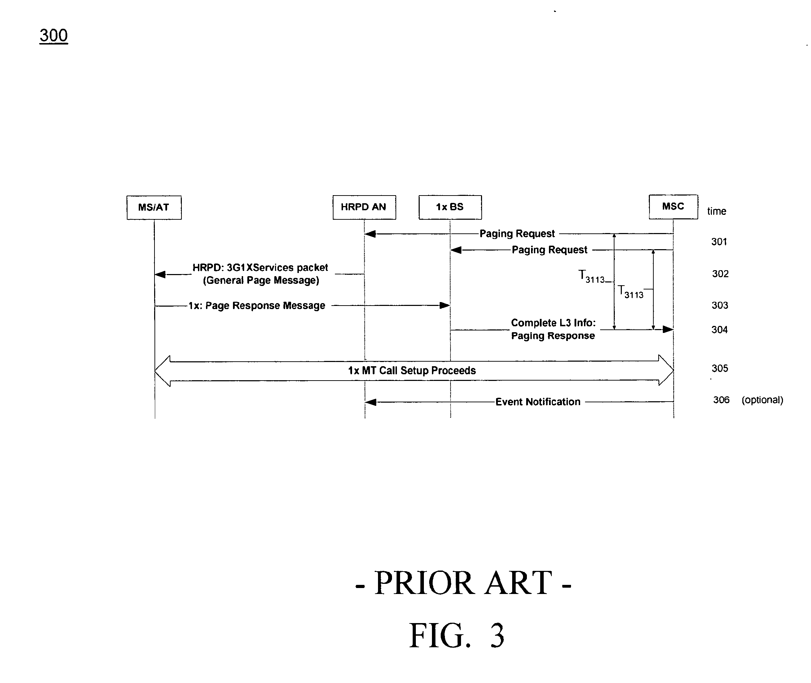

In call flow diagram 200, the HRPD network transitions the MS/AT's call to dormancy (203-206) after a period of time when the HRPD network can safely assume that the MS/AT has left the network (to avoid prematurely releasing resources for an MS/AT that hasn't left the network). While the solution described in this call flow assumes the MS/AT is capable of monitoring both the 1x and HRPD networks at the same time (dual receivers) and receiving the 1x page directly via the 1x network (an inefficient and costly solution in terms of equipment cost and mobile battery life), it can also be applied for the case where an MS/AT is cross-paged from the 1x RAN via the HRPD RAN. The drawback to this solution is that while resources are eventually released and the MS/AT's session is eventually transitioned to dormancy, it doesn't occur for a period of time until after the MS/AT has left the HRPD RAN as determined by MS/AT inactivity followed by a timer expiration. FIG. 3 illustrates an alternative solution.

FIG. 3 is an exemplary call flow diagram 300 depicting a 1x page delivery to an MS/AT in an HRPD system, in accordance with the prior art. See 4.5.3 of 3GPP2/A.S0008-A v1.0 (publication version). Call flow diagram 300 depicts an MS/AT 1x call termination, paging and service option notification over the HRPD air interface. The MS/AT is registered in and monitoring the HRPD system when the call arrives at the MSC, destined for the MS/AT. The following is a detailed description of the call flow timeline as labeled on the rightmost column of FIG. 3:
301. The MSC determines that an incoming call terminates to an MS/AT within its serving region. The MSC sends a Paging Request message to the HRPD AN and one or more 1x BSs reachable by an MS/AT within the HRPD AN's paging area. The MSC starts an instance of timer T3113 for each Paging Request message sent. Note that the Paging Request message may contain a Virtual Page Indicator (VPI) identifying that the 1x BS shall prepare to receive a Page Response Message from the MS/AT.
302. The HRPD AN sends a General Page Message to the MS/AT.
303. The MS/AT tunes to the 1x system and acknowledges the page by transmitting a Page Response message over the 1x Access Channel.
304. The 1x BS constructs the Paging Response message, places it in the Complete Layer 3 Information message, and sends the message to the MSC. If the Paging Request message contained a Tag IE, the 1x BS includes this IE in the Paging Response message. The MS/AT is implicitly registered in the 1x system. See the 3GPP2 standards documentation for a more detailed description of the completion of the MS call termination in the 1x system. The MSC stops all instances of timer T3113 for this MS/AT.
305. The 1x BS/MSC continues with MT call setup procedures.
306. The MSC may determine that the MS/AT, which has subscribed to Cross Notification services, has registered with the 1x system and send an Event Notification message to the HRPD AN containing registration event. This step can occur anytime after step 304.

In call flow diagram 300, the MSC sends an Event Notification message to the HRPD RAN after the MS/AT registers in or accepts a cross-page from the 1x RAN. While this solution aids the HRPD RAN in determining if the MS/AT has left its network, it requires an MSC interface to the HRPD RAN which many vendors do not plan to deploy. An additional problem which has not been addressed is registration updating the IMS network when the AT moves from the HRPD to 1x network so that future IMS calls will be routed to the 1x network (particularly a problem when dual registration is supported).

An additional problem occurs when a second network (1x or HRPD RAN) pages the MS/AT in a first RAN (1x or HRPD) and the MS/AT ignores the cross page from the second network, for example based on the caller ID of the caller or preference to continue the current service (circuit voice call in 1x RAN or packet data call in the HRPD RAN). The second network which is paging the MS/AT is never informed of this and may continue trying to page the MS/AT in both the 1x and HRPD RANs by broadening the page until eventually giving up. This requires network resources which are unnecessarily wasted since the MS/AT is ignoring the cross page from the second network.

Thus, a need exists for more resource efficient methods of providing service in multi-RAN communication systems.

### Brief Description of the Drawings

FIG. 1 is an exemplary call flow diagram depicting a 1x page delivery to an MS/AT in an HRPD system, in accordance with the prior art.
FIG. 2 is an exemplary call flow diagram depicting an AT leaving during an active HRPD Data Session, in accordance with the prior art.
FIG. 3 is an exemplary call flow diagram depicting a 1x page delivery to an MS/AT in an HRPD system, in accordance with the prior art.
FIG. 4 is a block diagram depiction of a HRPD IOS Architecture Reference Model (SC/MM in the AN), in accordance with multiple embodiments of the present invention.
FIG. 5 is a block diagram depiction of a HRPD IOS Architecture Reference Model (SC/MM in the PCF), in accordance with multiple embodiments of the present invention.
FIG. 6 is a block diagram depiction of a wireless communication system that includes a 1X network interfaced with a wireless packet data network, in accordance with multiple embodiments of the present invention.
FIG. 7 is an exemplary call flow diagram depicting an MS/AT in an A21-based HRPD network rejecting a 1x network cross-page, in accordance with multiple embodiments of the present invention.
FIG. 8 is an exemplary call flow diagram depicting an MS/AT in an MSC-based HRPD network rejecting a 1x network cross-page, in accordance with multiple embodiments of the present invention.
FIG. 9 is an exemplary call flow diagram depicting an MS/AT in an A21-based HRPD network accepting a 1x network cross-page, in accordance with multiple embodiments of the present invention.
FIG. 10 is an exemplary call flow diagram depicting a busy MS/AT in a 1x network rejecting an HRPD network cross-page (HRPD network is A21-based), in accordance with multiple embodiments of the present invention.

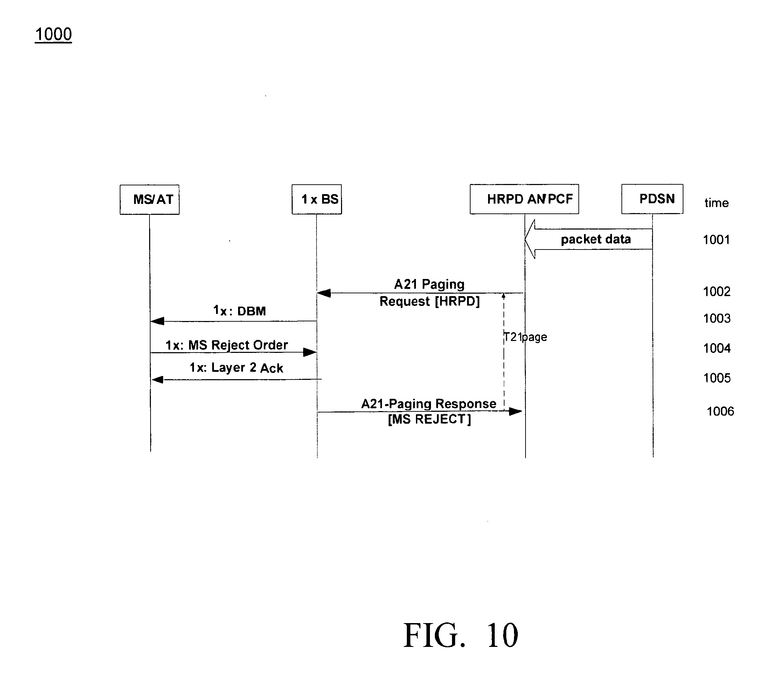

FIG. 10 is an exemplary call flow diagram depicting a busy MS/AT in a 1x network rejecting an HRPD network cross-page (HRPD network is A21-based), in accordance with multiple embodiments of the present invention.

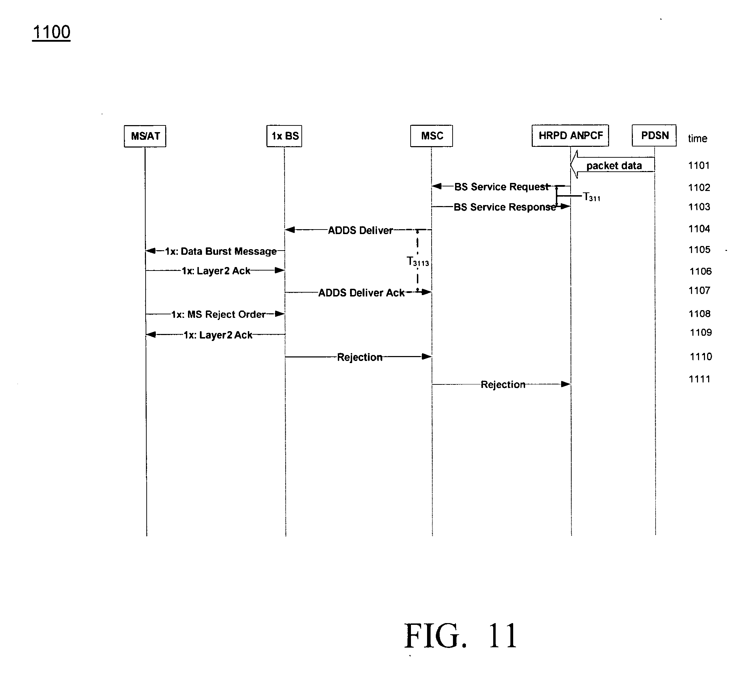

FIG. 11 is an exemplary call flow diagram depicting a busy MS/AT in a 1x network rejecting an HRPD network cross-page (HRPD network is MSC-based), in accordance with multiple embodiments of the present invention.

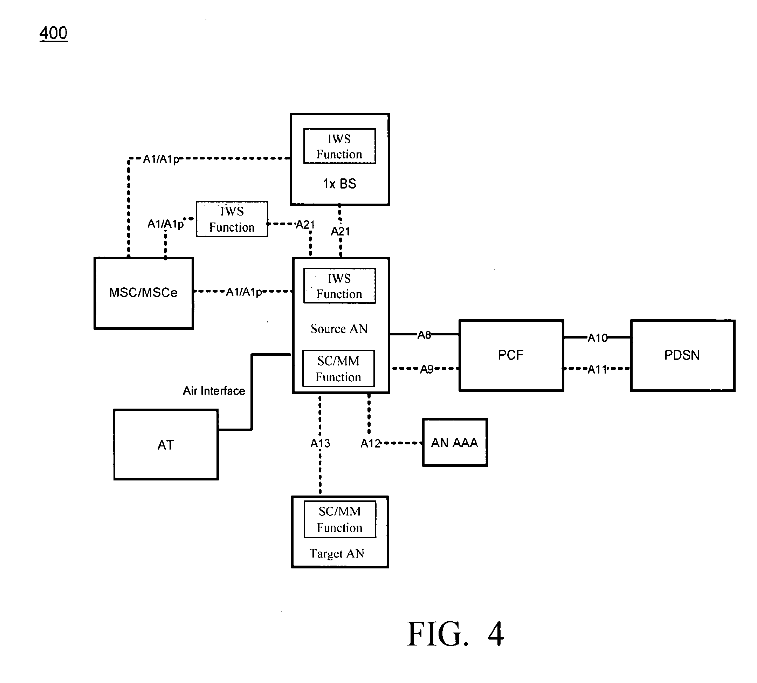

Specific embodiments of the present invention are disclosed below with reference to FIGs. 4-11. Note that while a 1x RAN and an HRPD RAN are described in the examples herein, embodiments of the present invention may also encompass other circuit / packet networks (WLAN and WIMAX, e.g.). Both the description and the illustrations have been drafted with the intent to enhance understanding. For example, the dimensions of some of the figure elements may be exaggerated relative to other elements, and well-known elements that are beneficial or even necessary to a commercially successful implementation may not be depicted so that a less obstructed and a more clear presentation of embodiments may be achieved. In addition, unless specifically indicated, the order and grouping of signaling is not a limitation of other embodiments that may lie within the scope of the claims

Simplicity and clarity in both illustration and description are sought to effectively enable a person of skill in the art to make, use, and best practice the present invention in view of what is already known in the art. One of skill in the art will appreciate that various modifications and changes may be made to the specific embodiments described below without departing from the spirit and scope of the present invention. Thus, the specification and drawings are to be regarded as illustrative and exemplary rather than restrictive or all-encompassing, and all such modifications. to the specific embodiments described below are intended to be included within the scope of the present invention.

### Detailed Description of Embodiments

To address the need for more resource efficient methods of providing service in multi-RAN communication systems, various embodiments are described for informing a cross-paging RAN that a targeted remote unit is not accepting a service request, for informing a serving RAN that the targeted remote unit is accepting the service request, and for informing an IMS (IP Multimedia Subsystem) network that the targeted remote unit is moving from the serving RAN to the cross-paging RAN (or simply moving to another RAN without being cross-paged). Thus, embodiments such as those described herein can enable multi-RAN communication systems to more quickly release unneeded resources, to reduce the amount of unnecessary paging, and to minimize cross-paging when an IMS core network is available to deliver voice over IP (VoIP) calls.

Embodiments of the present invention encompass a method for providing service in a multi-RAN (radio access network) communication system. A first RAN receives a request to page a remote unit for service to be provided from the second RAN and then pages the remote unit for the service, in response to the request. The first RAN may then receive an indication regarding the remote unit from either the remote unit or the second RAN. Indications that it may receive from the second RAN include: an indication that the remote unit has accepted the service, an indication of a move by the remote unit to the second RAN, an indication that the remote unit has registered in the second RAN, and/or an indication that the remote unit has been successfully acquired by the second RAN. Indications that it may receive from the remote unit include: an indication that the remote unit is leaving the first RAN, an indication that the remote unit is moving to the second RAN, an indication that the remote unit is deregistering with the first RAN, an indication that the remote unit is registering with the second RAN, an indication that the remote unit is accepting the service from the second RAN, and/or an indication that the remote unit is not accepting the service from the second RAN. When the first RAN receives from the remote unit a message indicating that the remote unit is not accepting the service, the first RAN sends a message indicating that the remote unit is not accepting the service.

Reference is made to registering and deregistering above; however, registering can refer to different activities depending on the context. For example, a remote unit is considered registered in a RAN after it notifies the RAN that it is monitoring a forward link channel transmitted by the RAN via an air interface supported by that RAN. This notification may be explicit, for example when the remote unit sends registration-related signaling via the RAN's air interface. Or, this notification may be implicit, for example when the remote unit sends a message to the RAN for call setup (e.g., an Origination or Page Response Message). A remote unit is considered registered in the IMS network when it notifies the IMS network, via signaling (SIP, e.g.) of its location. A given remote unit could be considered de-registered from the IMS network when the IMS network is notified that the remote unit is no longer in a packet data RAN or a new registration occurs that updates the remote unit location to a different RAN.

Embodiments of the present invention encompass another method for providing service in a multi-RAN communication system. A second RAN sends a request for a first RAN to page a remote unit for service to be provided from the second RAN. The second RAN may then either receive from the first RAN a message indicating that the remote unit is not accepting the service, or the second RAN may send at least one indication regarding the remote unit to the first RAN. The indication may include an indication that the remote unit has accepted the service, an indication that the remote unit is moving to the second RAN, an indication that the remote unit has registered in the second RAN, and/or an indication that the remote unit has been successfully acquired by the second RAN.

Embodiments of the present invention encompass yet another method for providing service in a multi-RAN communication system. A remote unit monitors signaling from a first RAN for service requests directed to the remote unit, notifies an IMS (IP Multimedia Subsystem) network of a move by the remote unit from the first RAN to the second RAN, and also begins monitoring signaling from the second RAN for service requests.

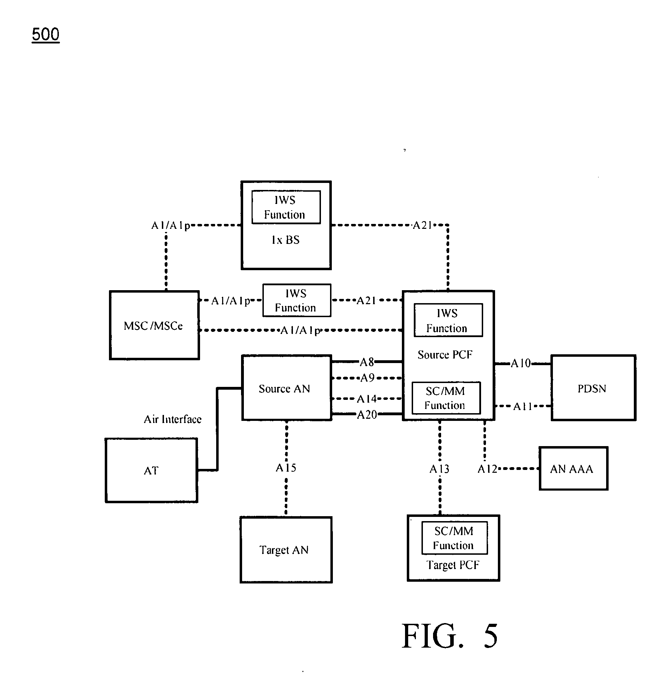

As a matter of background, FIGs. 4 and 5 provide examples of two alternative HRPD architectures that may be employed to embody the present invention. FIG. 4 is a block diagram depiction 400 of a HRPD IOS Architecture Reference Model in which SC/MM functionality is part of the AN. An A1/A1P interface terminates at the 1xBS and the MSC. The IWS Function may be collocated at either the 1x BS or at the HRPD AN, or may exist as a standalone entity. When the IWS function is collocated at the 1x BS, an A21 interface terminates at the 1x BS and the HRPD AN. When the IWS function is collocated at the HRPD AN, an A1/A1p interface is supported by the HRPD RAN and terminates at the MSC and the HRPD AN, and the A21 interface is internal to the HRPD AN. When the IWS exists as a standalone entity, an A1/A1p and A21 interface is supported by the HRPD RAN. The A1/A1P interface terminates at the MSC and the IWS, and the A21 interface terminates at the IWS and the HRPD AN.

FIG. 5 is a block diagram depiction 500 of a HRPD IOS Architecture Reference Model in which SC/MM functionality is part of the PCF (packet control function). An A1/A1P interface terminates at the 1xBS and the MSC. The IWS Function may be collocated at either the 1x BS or at the HRPD PCF, or may exist as a standalone entity. When the IWS function is collocated at the 1x PCF, an A21 interface terminates at the 1x BS and the HRPD PCF. When the IWS function is collocated at the HRPD PCF, an A1/A1p interface is supported by the HRPD RAN and terminates at the MSC and the HRPD PCF, and the A21 interface is internal to the HRPD PCF. When the IWS exists as a standalone entity, an A1/A1p and A21 interface is supported by the HRPD RAN. The A1/A1P interface terminates at the MSC and the IWS, and the A21 interface terminates at the IWS and the HRPD AN.

Thus, to summarize, diagrams 400 and 500 both depict alternative locations for the Interworking Solution (IWS) function. For example, in accordance with diagram 400, the IWS is logically collocated at either the1x BS or the AN, or as a standalone entity, and provides the functionality to translate between IOS A1/A1p messages received from/sent to an MSC and 1x air interface messages sent/received over the HRPD air interface. While in accordance with diagram 500, the IWS is logically collocated at either the 1x BS or at the PCF or as a standalone entity.

Some of the more pertinent interfaces include the A1, A1p, and A21 interfaces. The A1/A1P interface is supported in the 1x RAN between the MSC and 1xBS. With respect to the HRPD network (when a standalone IWS is deployed, or when the IWS is collocated at the in the HRPD AN or PCF), the A1 interface carries signaling information between the call control and mobility management functions of the circuit-switched MSC and the IWS function. The A1p interface carries signaling information between the call control and mobility management functions of the MSCe and the IWS function. In accordance with diagram 400, the A21 interface carries signaling information between the HRPD AN and the IWS or, when the IWS is collocated at a 1x BS, between the HRPD AN and the 1x BS. The A21 interface is used to pass 1x air interface signaling messages between the HRPD AN and the IWS or, when the IWS is collocated at the 1x BS, between the HRPD AN and the 1x BS. In some embodiments, this interface may only be supported when the IWS function is collocated at the 1x BS. While in accordance with diagram 500, the A21 interface carries signaling information between the HRPD PCF and the IWS or, when the IWS is collocated at a 1x BS, between the HRPD PCF and the 1x BS. Here, the A21 interface is used to transparently pass 1x air interface signaling messages between the HRPD PCF and the IWS or, when the IWS is collocated at a 1x BS, between the HRPD PCF and the 1x BS. Again, in some embodiments, this interface may only be supported when the IWS function is collocated at the 1x BS.

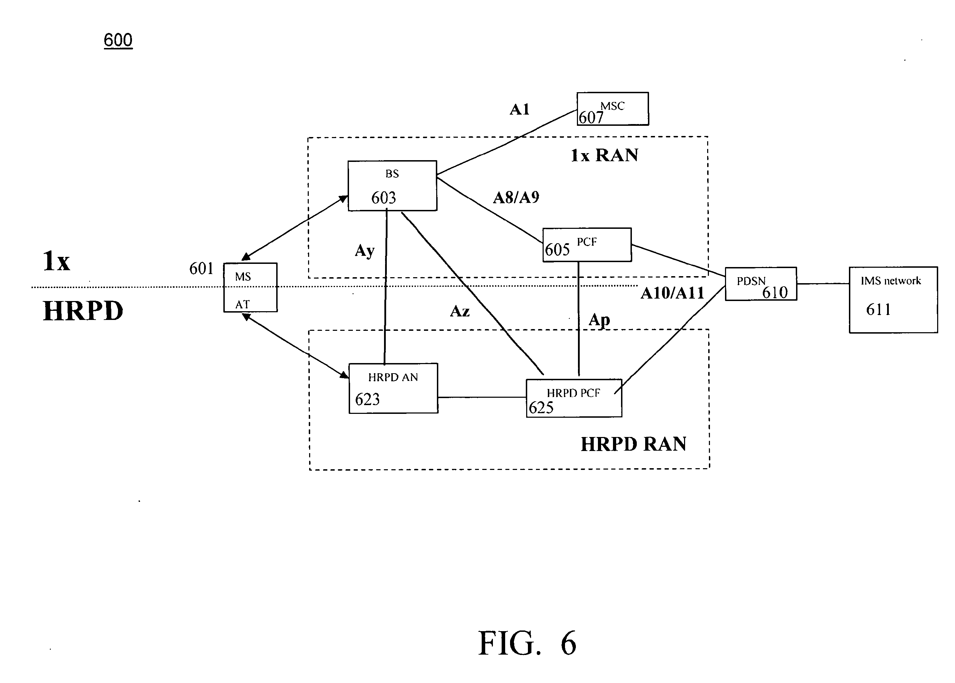

FIG. 6 is a block diagram 600 depiction of a wireless communication system that includes a 1X network interfaced with a wireless packet data network, in accordance with multiple embodiments of the present invention. The wireless packet data network depicted in FIG. 6 is an HRPD network. However, the present invention is not limited to HRPD networks. For example, the wireless communication system of FIG. 6 may instead or additionally include a wireless packet data network such as one based on IEEE 802.16 and/or 802.20 networks.

Diagram 600 depicts interfaces Ay, Az, and Ap. Depending on the embodiment, some, one or all of these interfaces may be supported. See co-pending application, Serial No. 11/141926, entitled "METHOD AND APPARATUS TO FACILITATE INTER-OPERABILITY BETWEEN A 3G1X NETWORK AND A WIRELESS PACKET DATA NETWORK," for more details regarding these interfaces. In some embodiments, interface Ay may correspond to or include interface A21.

Also, MS/AT 601 is often referred to as a hybrid mobile. MS/ATs in the present invention are not limited to mobile devices per se; thus, they could more accurately be referred to as remote units. For example, an MS/AT may comprise all manner of devices wirelessly connected to the radio access network such as computers, personal data assistants (PDAs), gaming devices, etc.

In the prior art, when an MS/AT in an HRPD network receives a CSNA General Page Message, the MS/AT may proceed to the 1x system without providing any indication (ConnectionClose) to the HPRD system that it is leaving. As a result, the HRPD RAN is unaware that the MS/AT has moved to the 1x RAN to answer the call and may continue holding network resources for the MS/AT's packet data session long after it has left.

Similarly, the MS/AT may choose to ignore the CSNA General Page Message (based on the caller ID of the caller or preference to continue HRPD service, e.g.). Current procedures do not require the MS/AT to provide any indication to the HRPD system when it is rejecting the CSNA General Page Message. As a result, the 1x network which is paging the MS/AT is never informed of this and may continue trying to page the MS/AT in both the 1x and HRPD RANs by broadening the page until eventually giving up. This requires network resources which are unnecessarily wasted since the MS/AT is ignoring the cross page from the 1x network.

In one embodiment, two new fields may be added to the SectorParameters message to indicate when an MS/AT is required to inform the HRPD system when it has accepted or rejected a CSNA General Page Message. A modified SectorParameters message is shown below.

| **Field** | **Length (bits)** |
|---|---|
| MessageID | 8 |
| CountryCode | 12 |
| SectorID | 128 |
| SubnetMask | 8 |
| [...] | |
| IsSectorMultiCarrierCapable | 1 |
| CrossPageAcceptReq | 1 |
| CrossPageDenyReq | 1 |
| Reserved | 0 - 7 (as needed) |

The access network can set the CrossPageAcceptReq field to '1' if the MS/AT is required to send a ConnectionClose message to close a connection prior to transitioning to the 1x system in response to a CSNA General Page Message. Otherwise, the access network can set this field to '0'. Additionally, the access network can set the CrossPageDenyReq field to `1' if the AT is required to send a CSNA Release Order when it is rejecting a CSNA General Page Message. Otherwise, the access network can set this field to '0'.

The example above is one way to indicate to remote units what signaling may be required by a particular RAN. Needless to say, there are many ways that remote units may be instructed to respond to service requests and many combinations of how they respond and how the RANs, MSCs, IMS components, etc. may process and distribute the remote unit responses. Descriptions of some examples of the different possibilities follow.

If an MS/AT decides to accept a cross-page for a circuit voice call from a 1x RAN via the HRPD RAN, MS/AT sends an HRPD air interface message/indication to the HRPD RAN to signal its impending departure from the HRPD RAN. This allows the HRPD RAN to be notified as soon as the MS/AT decides to accept the page and allows for more efficient resource utilization.

If the MS/AT accepts a cross-page from a second RAN while receiving service from a first RAN, after the MS/AT moves to the second RAN to accept the page and begins services, the second RAN sends a message to the first RAN via an inter-RAN signaling interface (A21, e.g.) notifying it that the MS/AT was successfully acquired by the second RAN. The first RAN then proceeds to release network resources for the MS/AT. In the case where the second RAN is a 1x circuit network and the first RAN is an HRPD RAN, the HRPD RAN transitions the MS/AT's packet data session to dormancy if it was active. This embodiment provides a positive notification to the first RAN after the MS/AT was successfully acquired by the second RAN without relying on an MSC or an MSC interface. The prior art requires either an RF loss or an A1 MSC interface to the HRPD RAN for the first RAN to make this determination.

A variety of embodiments are described to address some of the scenarios that exist when an MS/AT receiving service from a first RAN is cross-paged for a service from a second RAN and decides to reject the cross-page:
If the first RAN is an HRPD RAN and the second RAN is a 1x RAN, MS/AT sends explicit indication over the HRPD air interface to the HRPD RAN that it is rejecting the page request. MS/AT sends CSNA encapsulated message (e.g. MS Reject Order or Release Order) to the HRPD RAN.
If the first RAN is a 1x RAN and the second RAN is an HRPD RAN, MS/AT sends an MS Reject Order in response to a Data Burst Message (DBM) or Page Response Message (PRM) with Service Option =0 in response to a General Page Message to the 1x network informing it that it has rejected the cross page.
After rejecting the page, the first RAN sends a message/indication to the second RAN notifying it that the MS/AT rejected the cross-page. Message/indication is sent over HRPD-1x A21 inter-RAN interface to second network. Message/Indication may also be sent via A1 MSC interface if MSC based HRPD architecture is used. Second RAN aborts further paging attempts to the MS/AT in response to the message from the first RAN.
If the first RAN is a 1x RAN and the second RAN is an HRPD RAN, and the cross-page is received as a DBM containing a SIP INVITE, the MS/AT may reject the SIP INVITE by responding with a SIP message rejecting the cross page. Since the 1x circuit RAN doesn't support HRPD or SIP signaling, the SIP messages are sent in an HRPD DataOverSignaling (DOS) message which is encapsulated in a 1x DBM message over the 1x air interface (TIA-2000).. Note that in contrast to other scenarios described above, neither the 1x RAN nor HRPD RAN are aware that a cross-page was sent by the IMS network to the AT, therefore no cross-page reject is sent by the 1x RAN to the HRPD RAN.

Other embodiments of this invention address networks where an IMS core network is deployed. In order for the IMS network to efficiently determine where to deliver incoming calls from the IMS network (either a packet data RAN or circuit RAN) to minimize cross paging, it would be beneficial for the IMS network to know which RAN the mobile is currently monitoring without incurring additional signaling overhead during call setup time. Note that while a 1x RAN and HRPD RAN are discussed here as examples, the examples described here can apply to any joint circuit-packet network, for example a 1x-WLAN dual technology network.

In these dual networks where IMS connectivity is available and cross-paging across 1x-HPRD RAN is supported, after the AT moves to and registers with HRPD RAN, it also registers with the IMS network enabling VoIP call delivery via the HRPD RAN. However when the MS/AT moves to the 1x network, a method is needed to efficiently notify the IMS network that the MS/AT is no longer monitoring the HRPD RAN so that future voice calls can be delivered as 1x circuit voice calls via the 1x circuit RAN.

If the IMS network doesn't have this information, the IMS network can either 'guess' where the MS/AT is currently located risking call delivery to the wrong RAN (which must be followed up by cross-paging to the correct RAN resulting in less efficient call delivery) or it must query other 'core' network entities to determine where the MS/AT is located which also results in extended call setup times and furthermore, incurs additional overhead in the IMS network to support voice call delivery in dual domain networks.

Therefore a method is needed to inform the IMS network that the AT is leaving or has left the HRPD RAN so that future voice calls are not delivered as VoIP calls to the HRPD RAN. Future call delivery from the IMS network would then be directed to the 1x RAN which the MS/AT is currently monitoring, eliminating the need for cross-paging when the IMS network incorrectly guesses the location of the mobile. Several embodiments stem from the following options.

Prior to leaving the HRPD RAN, the AT sends a SIP message (SIP NOTIFY, e.g.) to the IMS network via the HRPD RAN. HRPD RAN forwards message to the PDSN/packet core network which forwards it on to the SIP server in the IMS network. If the MS/AT happens to have a dormant session on the HRPD RAN (no traffic channel allocated to the MS/AT) SIP signaling is sent on a traffic channel by reactivating the HRPD packet data session prior to the MS/AT's departure. Alternatively, SIP signaling may be sent as an HRPD DOS message to the HRPD RAN prior to the MS/AT's departure. The AT may alternatively send application defined IP Packets to inform the IMS network rather than a SIP message in the HRPD DOS message in order to minimize the message size requirements. Following delivery of the SIP message or IP Packets, the IMS network is aware that the MS/AT is monitoring the 1x RAN and delivers future voice calls as circuit voice calls to the 1x RAN.

After moving to and registering in the 1x RAN, AT sends a SIP message (SIP NOTIFY or SIP BYE, e.g.) to the 1x RAN which is forwarded to the HRPD RAN and on to the IMS network to notify it that the MS/AT is registered in the 1x RAN (SIP NOTIFY), or de-registering from the IMS network (SIP BYE). Since the 1x circuit RAN doesn't support HRPD or SIP signaling, the SIP message is sent in an HRPD DOS message which is encapsulated in a 1x DBM message over the 1x air interface (TIA-2000). 1x RAN forwards the HRPD DOS containing SIP signaling to HRPD network (e.g., via A21) which forwards the registration information on to the SIP server in the IMS network. In order to minimize the size of the HRPD DOS message, the AT may alternatively include application defined IP Packets in the HRPD DOS message rather than a SIP message to inform the IMS network.

Alternatively, after HRPD RAN receives HRPD message/indication from the MS/AT that it is leaving the HRPD RAN or explicit signaling from the 1x RAN that the MS/AT has successfully registered in or has been acquired by the 1x RAN, the HRPD RAN or a packet core network entity generates SIP signaling on behalf of the MS/AT to inform the IMS network that the AT has moved to the 1x network.

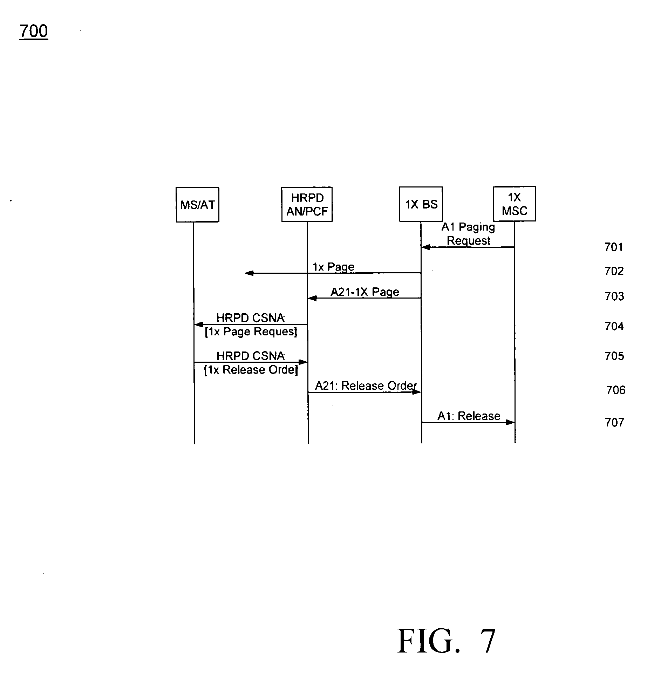

FIG. 7 is an exemplary call flow diagram 700 depicting an MS/AT in an A21-based HRPD network rejecting a 1x network cross-page, in accordance with multiple embodiments of the present invention. The following is a detailed description of the call flow timeline as labeled on the rightmost column of FIG. 7:
701. MSC sends a Paging Request to the 1x BS for a circuit voice call (and HRPD AN/PCF in A1-based architecture).
702. The 1x BS may send a Page Request over the 1x air interface to prepare for an unsolicited Page Response from the MS/AT.
703. The 1X BS sends a Page Request to the HRPD RAN where the MS/AT is registered for HRPD service.
704. The HRPD RAN sends a 1x Page message encapsulated in an HRPD CSNA message to the MS/AT (See C.S0024-A).
705. The MS/AT sends a 1x message rejecting the page message encapsulated in an HRPD CSNA message.
706. The HRPD RAN forward the MS/AT's rejection for 1x circuit services over to the 1x network via the A21 inter-RAN interface.
707. The 1x RAN forwards the MS/AT's rejection for 1x circuit services to the MSC via a new A1/A1P 'connectionless' (SCCP *UDT*/*SUA CLDT*) Release message. The 1x RAN and MSC aborts further paging of the MS/AT in response to the rejection of the page message from the MS/AT received via the HRPD RAN.

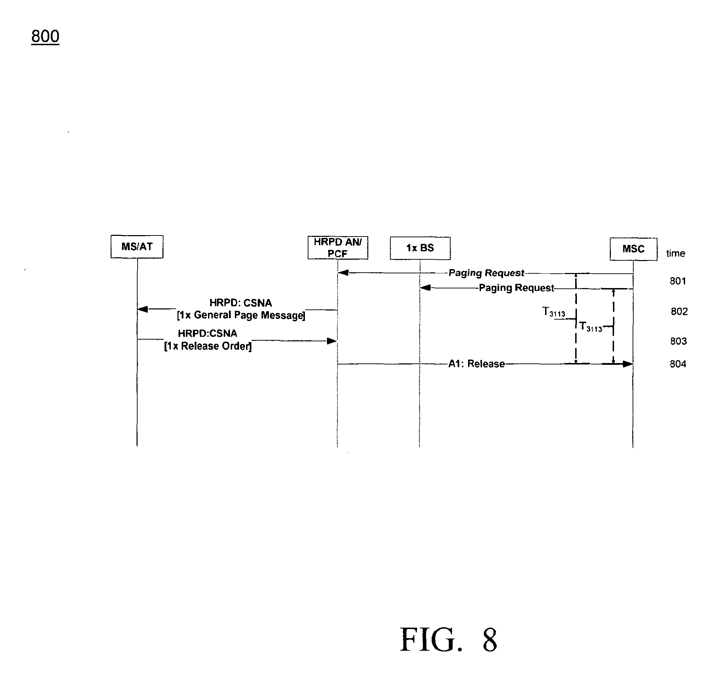

FIG. 8 is an exemplary call flow diagram 800 depicting an MS/AT in an MSC-based HRPD network rejecting a 1x network cross-page, in accordance with multiple embodiments of the present invention. The following is a detailed description of the call flow timeline as labeled on the rightmost column of FIG. 8:
801. MSC sends a Paging Request to the 1x BS for a circuit voice call and HRPD AN/PCF in A1-based architecture. The 1x BS may send a Page Request over the 1x air interface to prepare for an unsolicited Page Response from the MS/AT. The 1X BS sends a Page Request to the HRPD RAN where the MS/AT is registered for HRPD service.
802. The HRPD RAN sends a 1x Page message encapsulated in an HRPD CSNA message to the MS/AT.
803. The MS/AT sends a 1x Release message rejecting the page message encapsulated in an HRPD CSNA message.
804. The HRPD RAN forwards the MS/AT's rejection for 1x circuit services to the MSC via a new A1/A1P 'connectionless' (SCCP *UDT*/*SUA CLDT*) Release message. The MSC aborts further paging of the MS/AT in response to the rejection of the page message from the MS/AT received via the HRPD RAN.

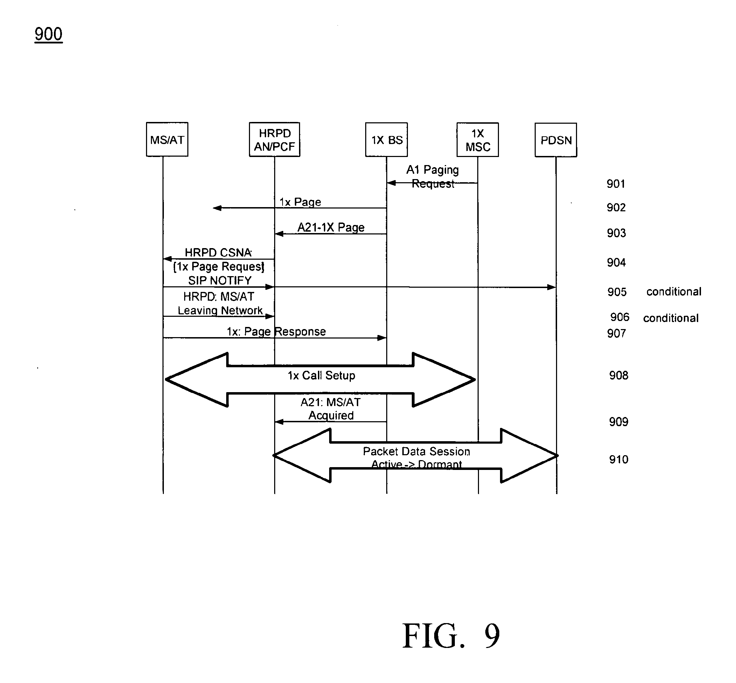

FIG. 9 is an exemplary call flow diagram 900 depicting an MS/AT, in an A21-based HRPD network with an active packet data session, accepting a 1x network cross-page, in accordance with multiple embodiments of the present invention. The following is a detailed description of the call flow timeline as labeled on the rightmost column of FIG. 9:
901. MSC sends a Paging Request to the 1x BS for a circuit voice call (and HRPD AN/PCF in A1-based architecture).
902. The 1x BS may send a Page Request over the 1x air interface to prepare for an unsolicited Page Response from the MS/AT.
903. The 1X BS sends a Page Request to the HRPD RAN where the MS/AT is registered for HRPD service.
904. The HRPD RAN sends a 1x Page message encapsulated in an HRPD CSNA message to the MS/AT (See C.S0024-A).
905. MS/AT sends SIP NOTIFY (if dual registration is supported) or SIP BYE to notify IMS network that it is leaving the IMS domain and moving to 1x. Alternatively, AT may send SIP BYE or SIP NOTIFY to the 1x network after 908 (as a DOS message encapsulated in a 1x DBM) which is forwarded to the HRPD RAN over A21. HRPD RAN forwards the SIP message, received from AT, to the PDSN which forwards it on to the IMS network.
906. The MS/AT sends an HRPD message indicating that it is leaving the HRPD RAN for services on the 1x network:
   Option 1: HRPD transitions MS/AT's session to dormant and releases HRPD RAN resources that are no longer required (HRPD traffic channel, etc.).
   Option 2: HRPD RAN stops routing data over the air interface, billing, etc. and waits to hear from 1x network before transitioning MS/AT's session to dormant (i.e., HRPD traffic channel is not yet released).
907. The MS/AT responds with a Page Response message to the 1x network to accept the circuit voice call.
908. 1x circuit voice call is setup between the MS/AT and 1x network.
909. The 1x RAN sends an indication to the HRPD network that the MS/AT was successfully acquired (in Option 2).
910. The HRPD RAN transitions the MS/ATs packet data session to dormancy and releases RAN resources that are no longer required. For Option 1, this step occurs any time after 906.

FIG. 10 is an exemplary call flow diagram 1000 depicting a busy MS/AT in a 1x network rejecting an HRPD network cross-page (HRPD network is A21-based), in accordance with multiple embodiments of the present invention. The following is a detailed description of the call flow timeline as labeled on the rightmost column of FIG. 10:
1001. The PDSN sends packet data to the HRPD AN/PCF on an existing PPP connection associated with a specific MS/AT and dormant packet data session.
1002. The HRPD AN/PCF, aware that the MS/AT is currently registered in the 1x RAN, forwards a request to page the MS/AT in the 1x network to the 1x BS via the A21 interface. The message includes an HRPD service option in the message.
1003. Since the MS/AT is currently busy with another call, the 1x BS sends a 1x Data Burst message (DBM) to the MS/AT over the traffic channel with the Burst Type field set to `000111'.
1004. The MS/AT rejects the HRPD page for service by sending a 1x MS Reject order to the 1x BS.
1005. The 1x BS acknowledges receipt of the 1x MS Reject Order with a layer 2 ack.
1006. The 1x BS sends an A21-Paging Response message containing an indication that the MS/AT rejected the HRPD Page Request to the HRPD AN/PCF. The HRPD AN/PCF aborts further paging of the MS/AT for a period of time (for a fixed period of time, or until the MS/AT goes idle in the 1x network).

FIG. 11 is an exemplary call flow diagram 1100 depicting a busy MS/AT in a 1x network rejecting an HRPD network cross-page (HRPD network is MSC-based), in accordance with multiple embodiments of the present invention. The following is a detailed description of the call flow timeline as labeled on the rightmost column of FIG. 11:
1101. The PDSN sends packet data to the HRPD AN/PCF on an existing PPP connection associated with a specific MS/AT and dormant packet data session.
1102. Based on vendor specific procedures (e.g., stored information indicating that the MS/AT has registered with the 1x system), the HRPD AN sends a BS Service Request message indicating that packet data is received at the HRPD system to the MSC and starts timer T311. This message contains a data burst of type 7 (refer to C.S0075-0).
1103. The MSC responds with a BS Service Response message. The HRPD AN stops timer T311.
1104. Receipt of the BS Service Request message, and the MS/AT being on a traffic channel, triggers the MSC to send an ADDS Deliver message to the 1x BS. The MSC starts timer T3113.
1105. The 1x BS transmits the data burst received at 1104 over the forward traffic channel.
1106. The MS/AT acknowledges delivery of the data burst on the traffic channel with a Layer 2 Ack.
1107. If the MSC had requested a response by including the Tag IE in the ADDS Deliver message, the 1x BS replies with an ADDS Deliver Ack message including the same Tag IE in the ADDS Deliver message when it has received acknowledgement from the MS/AT that the message was delivered.
1108. The MS/AT rejects the HRPD page for service by sending a 1x MS Reject order to the 1x BS.
1109. The 1x BS acknowledges receipt of the 1x MS Reject Order with a Layer 2 Ack.
1110. The BS sends a Rejection message to the MSC to convey the information contained in the Reject Order.
1111. The MSC forwards the Rejection message to the HRPD AN/PCF. The HRPD AN/PCF aborts further paging of the MS/AT for a period of time (for a fixed period of time, or until the MS/AT goes idle in the 1x network).

The detailed and, at times, very specific description above is provided to effectively enable a person of skill in the art to make, use, and best practice the present invention in view of what is already known in the art. In the examples, specific architectures, specific message names, specific message field values, specific messaging formats, and specific messaging sequences are all provided for the purpose of illustrating possible embodiments of the present invention and should not be interpreted as restricting or limiting the scope of the broader inventive concepts. Benefits, other advantages, and solutions to problems have been described above with regard to specific embodiments of the present invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

As used herein and in the appended claims, the term "comprises," "comprising," or any other variation thereof is intended to refer to a non-exclusive inclusion, such that a process, method, article of manufacture, or apparatus that comprises a list of elements does not include only those elements in the list, but may include other elements not expressly listed or inherent to such process, method, article of manufacture, or apparatus. The terms a or an, as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly, and not necessarily mechanically. Terminology derived from the word "indicating" (e.g., "indicates" and "indication") are intended to encompass all the various techniques available for communicating or referencing the object being indicated. Some, but not all examples of techniques available for communicating or referencing the object being indicated include the conveyance of the object being indicated, the conveyance of an identifier of the object being indicated, the conveyance of information used to generate the object being indicated, the conveyance of some part or portion of the object being indicated, the conveyance of some derivation of the object being indicated, and the conveyance of some symbol representing the object being indicated. The terms program, computer program, and computer instructions, as used herein, are defined as a sequence of instructions designed for execution on a computer system. This sequence of instructions may include, but is not limited to, a subroutine, a function, a procedure, an object method, an object implementation, an executable application, an applet, a servlet, a shared library/dynamic load library, a source code, an object code and/or an assembly code.

The following clauses describe further aspects of the present invention.
1. A method for providing service in a multi-RAN (radio access network) communication system, the method comprising:
   receiving, by a first RAN, a request to page a remote unit for service to be provided from a second RAN;
   paging by the first RAN the remote unit for the service, in response to the request;
   performing at least one function from the group consisting of:
      receiving, by the first RAN from the second RAN, an indication regarding the remote unit from the group consisting of:
         an indication that the remote unit has accepted the service,
         an indication of a move by the remote unit to the second RAN,
         an indication that the remote unit has registered in the second RAN, and
         an indication that the remote unit has been successfully acquired by the second RAN; and
      receiving, by the first RAN from the remote unit in response to the paging, a message indicating at least one remote unit response from the group consisting of:
         the remote unit is leaving the first RAN,
         an indication that the remote unit is moving to the second RAN,
         the remote unit is deregistering with the first RAN,
         the remote unit is registering with the second RAN,
         the remote unit is accepting the service from the second RAN, and
         the remote unit is not accepting the service from the second RAN;
      when the first RAN receives from the remote unit a message indicating that the remote unit is not accepting the service, sending by the first RAN a message indicating that the remote unit is not accepting the service.
2. The method of clause 1, wherein receiving, by the first RAN from the remote unit in response to the paging, a message indicating that the remote unit is moving to the second RAN comprises
   receiving, by the first RAN from the remote unit in response to the paging, SIP messaging from the group consisting of:
      SIP messaging for notifying an IMS network that the remote unit is moving to the second RAN and
      SIP messaging for notifying an IMS network that the remote unit is deregistering from the IMS network for IMS services.
3. The method of clause 1, further comprising performing at least one function from the group consisting of:
   indicating to the remote unit what signaling to the first RAN is required, in response to a page for service to be provided from a second RAN, when the remote unit accepts the service, and
   indicating to the remote unit what signaling to the first RAN is required, in response to a page for service to be provided from a second RAN, when the remote unit rejects the service.
4. The method of clause 1, wherein the first RAN comprises a circuit RAN and the second RAN comprises packet data RAN.
5. The method of clause 1, wherein the first RAN comprises packet data RAN and the second RAN comprises a circuit RAN.
6. The method of clause 1, wherein receiving, by the first RAN from the remote unit in response to the paging, a message indicating that the remote unit is not accepting the service comprises receiving, by the first RAN from the remote unit in response to the paging, a message indicating that the remote unit is rejecting the page for service in the second RAN.
7. The method of clause 1, further comprising
   when the first RAN receives from the remote unit a message indicating at least one remote unit response from the group consisting of:
      the remote unit is leaving the first RAN,
      the remote unit is moving to the second RAN,
      the remote unit is deregistering with the first RAN,
      the remote unit is registering with the second RAN, and
      the remote unit is accepting the service,
   performing at least one function from the group consisting of:
      indicating to an IMS network that the remote unit is moving to the second RAN,
      indicating to an IMS network that the remote unit is registering for IMS services,
      indicating to an IMS network that the remote unit is deregistering for IMS services,
      releasing at least one resource that was used by the first RAN to support service to the remote unit,
      suspending by the first RAN active service to the remote unit,
      ceasing by the first RAN to route data to the remote unit,
      ceasing billing activity by the first RAN for service to the remote unit, and
      transitioning at least one session associated with the remote unit and the first RAN to a dormant state.
8. The method of clause 1, further comprising
   when the first RAN receives from the second RAN an indication regarding the remote unit from the group consisting of:
   an indication that the remote unit has accepted the service,
   an indication of a move by the remote unit to the second RAN,
   an indication that the remote unit has registered in the second RAN, and
   an indication that the remote unit has been successfully acquired by the second RAN,
   performing at least one function from the group consisting of:
   indicating to an IMS network that the remote unit is moving to the second RAN,
   indicating to an IMS network that the remote unit is deregistering from IMS services,
   releasing at least one resource that was used by the first RAN to support service to the remote unit,
   suspending by the first RAN active service to the remote unit,
   ceasing by the first RAN to route data to the remote unit,
   ceasing billing activity by the first RAN for service to the remote unit, and
   transitioning at least one session associated with the remote unit and the first RAN to a dormant state.
9. The method of clause 1, wherein receiving a request to page the remote unit for the service to be provided from the second RAN comprises
   receiving, from a device in the group consisting of the second RAN, an IWS (interworking solution), and a mobile switching center (MSC), a request to page the remote unit for the service; and
      wherein sending by the first RAN a message indicating that the remote unit is not accepting the service comprises
   sending, by the first RAN to a device in the group consisting of the second RAN, the IWS (interworking solution), and the MSC, a message indicating that the remote unit is not accepting the service.
10. The method of clause 1, wherein receiving, by the first RAN, an indication regarding the remote unit comprises performing at least one function from the group consisting of:
   receiving, by the first RAN from the second RAN, the indication via an A21 inter-RAN interface and
   receiving, by the first RAN from the second RAN via an MSC, the indication via an A1 interface.
11. The method of clause 1,
   wherein the first RAN comprises a 1x RAN and the second RAN comprises an HRPD (High Rate Packet Data) RAN and
   wherein receiving, by the first RAN from the remote unit in response to the paging, a message indicating that the remote unit is not accepting the service comprises receiving a Mobile Station Reject Order indicating that the remote unit is rejecting the paging.
12. A method for providing service in a multi-RAN (radio access network) communication system, the method comprising:
   sending by a second RAN a request for a first RAN to page a remote unit for service to be provided from the second RAN;
   performing at least one function from the group consisting of:
      sending, by the second RAN to the first RAN, at least one indication regarding the remote unit from the group consisting of:
         an indication that the remote unit has accepted the service,
         an indication of a move by the remote unit to the second RAN,
         an indication that the remote unit has registered in the second RAN, and
         an indication that the remote unit has been successfully acquired by the second RAN; and
      receiving, by the second RAN from the first RAN, a message indicating that the remote unit is not accepting the service.
13. The method of clause 12, wherein when the second RAN receives from the first RAN a message indicating that the remote unit is not accepting the service, performing at least one function from the group consisting of:
   sending an indication to the packet data network to stop sending packet data;
   sending, by the second RAN to a mobile switching center (MSC), a message indicating that the remote unit is not accepting the service; and
   ceasing to initiate further paging of the remote unit for the service in response to receiving the message indicating that the remote unit is not accepting the service.
14. The method of clause 12, wherein sending an indication that the remote unit is moving to the second RAN comprises
   sending the indication in response to receiving from the remote unit SIP messaging for notifying an IMS (IP Multimedia Subsystem) network that the remote unit is moving to the second RAN.
15. A method for providing service in a multi-RAN (radio access network) communication system, the method comprising:
   monitoring, by a remote unit, signaling from a first RAN for service requests directed to the remote unit;
   notifying, by the remote unit, an IMS (IP Multimedia Subsystem) network of a move by the remote unit from the first RAN to a second RAN;
   beginning to monitor signaling from the second RAN for service requests.
16. The method of clause 15,
   wherein monitoring signaling from the first RAN for service requests directed to the remote unit comprises monitoring for pages at the first RAN, and
   wherein beginning to monitor signaling from the second RAN for service requests comprises monitoring for pages at the second RAN.
17. The method of claim 15, wherein notifying the IMS network of a move by the remote unit from the first RAN to the second RAN comprises
   notifying the IMS network, via the first RAN prior to beginning to monitor signaling from the second RAN for service requests, that the remote unit will be moving to the second RAN.
18. The method of clause 15, wherein notifying the IMS network of a move by the remote unit from the first RAN to the second RAN comprises
   notifying the IMS network, via the second RAN, of the move by the remote unit from the first RAN to the second RAN.
19. The method of clause 15, wherein notifying the IMS network of a move by the remote unit from the first RAN to the second RAN comprises performing at least one function from the group consisting of:
   sending SIP (session initiation protocol) messaging to the IMS network to notify the IMS network of the move by the remote unit from the first RAN to the second RAN,
   sending at least one application defined IP packet to the IMS network to notify the IMS network of the move by the remote unit from the first RAN to the second RAN, and
   sending SIP messaging to the IMS network deregistering from IMS services to notify the IMS network of the move by the remote unit from the first RAN to the second RAN.
20. A method for providing service in a multi-RAN (radio access network) communication system, the method comprising:
   receiving, by a remote unit from a first RAN, paging directed to the remote unit for services from a second RAN;
   performing by the remote unite at least one function from the group consisting of:
      sending a message to the first RAN indicating that the remote unit is leaving the first RAN,
      sending a message to the first RAN indicating that the remote unit is moving to the second RAN,
      sending a message to the first RAN indicating that the remote unit is deregistering with the first RAN,
      sending a message to the first RAN indicating the remote unit is registering with the second RAN,
      sending a message to the first RAN indicating the remote unit is accepting the service from the second RAN, and
      sending a message to the first RAN indicating the remote unit is not accepting the service from the second RAN.

## Claims

1. A method for providing service in a multi-RAN (radio access network) communication system, the method comprising:
receiving, by a first RAN, a request to page a remote unit for service to be provided from a second RAN;
paging by the first RAN the remote unit for the service, in response to the request;
performing at least one function from the group consisting of:
receiving, by the first RAN from the second RAN, an indication regarding the remote unit from the group consisting of:
an indication that the remote unit has accepted the service,
an indication of a move by the remote unit to the second RAN,
an indication that the remote unit has registered in the second RAN, and
an indication that the remote unit has been successfully acquired by the second RAN; and
receiving, by the first RAN from the remote unit in response to the paging, a message indicating at least one remote unit response from the group consisting of:
the remote unit is leaving the first RAN,
an indication that the remote unit is moving to the second RAN,
the remote unit is deregistering with the first RAN,
the remote unit is registering with the second RAN,
the remote unit is accepting the service from the second RAN, and
the remote unit is not accepting the service from the second RAN;
when the first RAN receives from the remote unit a message indicating that the remote unit is not accepting the service, sending by the first RAN a message indicating that the remote unit is not accepting the service.

2. The method of claim 1, wherein receiving, by the first RAN from the remote unit in response to the paging, a message indicating that the remote unit is moving to the second RAN comprises
receiving, by the first RAN from the remote unit in response to the paging, SIP messaging from the group consisting of:
SIP messaging for notifying an IMS network that the remote unit is moving to the second RAN and
SIP messaging for notifying an IMS network that the remote unit is deregistering from the IMS network for IMS services.

3. The method of claim 1, further comprising performing at least one function from the group consisting of:
indicating to the remote unit what signaling to the first RAN is required, in response to a page for service to be provided from a second RAN, when the remote unit accepts the service, and
indicating to the remote unit what signaling to the first RAN is required, in response to a page for service to be provided from a second RAN, when the remote unit rejects the service.

4. The method of claim 1, further comprising
when the first RAN receives from the remote unit a message indicating at least one remote unit response from the group consisting of:
the remote unit is leaving the first RAN,
the remote unit is moving to the second RAN,
the remote unit is deregistering with the first RAN,
the remote unit is registering with the second RAN, and
the remote unit is accepting the service,
performing at least one function from the group consisting of:
indicating to an IMS network that the remote unit is moving to the second RAN,
indicating to an IMS network that the remote unit is registering for IMS services,
indicating to an IMS network that the remote unit is deregistering for IMS services,
releasing at least one resource that was used by the first RAN to support service to the remote unit,
suspending by the first RAN active service to the remote unit,
ceasing by the first RAN to route data to the remote unit,
ceasing billing activity by the first RAN for service to the remote unit, and
transitioning at least one session associated with the remote unit and the first RAN to a dormant state.

5. The method of claim 1, further comprising
when the first RAN receives from the second RAN an indication regarding the remote unit from the group consisting of:
an indication that the remote unit has accepted the service,
an indication of a move by the remote unit to the second RAN,
an indication that the remote unit has registered in the second RAN, and
an indication that the remote unit has been successfully acquired by the second RAN,
performing at least one function from the group consisting of:
indicating to an IMS network that the remote unit is moving to the second RAN,
indicating to an IMS network that the remote unit is deregistering from IMS services,
releasing at least one resource that was used by the first RAN to support service to the remote unit,
suspending by the first RAN active service to the remote unit,
ceasing by the first RAN to route data to the remote unit,
ceasing billing activity by the first RAN for service to the remote unit, and
transitioning at least one session associated with the remote unit and the first RAN to a dormant state.

6. A method for providing service in a multi-RAN (radio access network) communication system, the method comprising:
sending by a second RAN a request for a first RAN to page a remote unit for service to be provided from the second RAN;
performing at least one function from the group consisting of:
sending, by the second RAN to the first RAN, at least one indication regarding the remote unit from the group consisting of:
an indication that the remote unit has accepted the service,
an indication of a move by the remote unit to the second RAN,
an indication that the remote unit has registered in the second RAN, and
an indication that the remote unit has been successfully acquired by the second RAN; and
receiving, by the second RAN from the first RAN, a message indicating that the remote unit is not accepting the service.

7. The method of claim 6, wherein when the second RAN receives from the first RAN a message indicating that the remote unit is not accepting the service, performing at least one function from the group consisting of:
sending an indication to the packet data network to stop sending packet data;
sending, by the second RAN to a mobile switching center (MSC), a message indicating that the remote unit is not accepting the service; and
ceasing to initiate further paging of the remote unit for the service in response to receiving the message indicating that the remote unit is not accepting the service.

8. A method for providing service in a multi-RAN (radio access network) communication system, the method comprising:
monitoring, by a remote unit, signaling from a first RAN for service requests directed to the remote unit;
notifying, by the remote unit, an IMS (IP Multimedia Subsystem) network of a move by the remote unit from the first RAN to a second RAN;
beginning to monitor signaling from the second RAN for service requests.

9. The method of claim 8, wherein notifying the IMS network of a move by the remote unit from the first RAN to the second RAN comprises
notifying the IMS network, via the first RAN prior to beginning to monitor signaling from the second RAN for service requests, that the remote unit will be moving to the second RAN.

10. The method of claim 8, wherein notifying the IMS network of a move by the remote unit from the first RAN to the second RAN comprises
notifying the IMS network, via the second RAN, of the move by the remote unit from the first RAN to the second RAN.

11. The method of claim 8, wherein notifying the IMS network of a move by the remote unit from the first RAN to the second RAN comprises performing at least one function from the group consisting of:
sending SIP (session initiation protocol) messaging to the IMS network to notify the IMS network of the move by the remote unit from the first RAN to the second RAN,
sending at least one application defined IP packet to the IMS network to notify the IMS network of the move by the remote unit from the first RAN to the second RAN, and
sending SIP messaging to the IMS network deregistering from IMS services to notify the IMS network of the move by the remote unit from the first RAN to the second RAN.

12. A method for providing service in a multi-RAN (radio access network) communication system, the method comprising:
receiving, by a remote unit from a first RAN, paging directed to the remote unit for services from a second RAN;
performing by the remote unite at least one function from the group consisting of:
sending a message to the first RAN indicating that the remote unit is leaving the first RAN,
sending a message to the first RAN indicating that the remote unit is moving to the second RAN,
sending a message to the first RAN indicating that the remote unit is deregistering with the first RAN,
sending a message to the first RAN indicating the remote unit is registering with the second RAN,
sending a message to the first RAN indicating the remote unit is accepting the service from the second RAN, and
sending a message to the first RAN indicating the remote unit is not accepting the service from the second RAN.
